# EUROPÄISCHE PATENTSCHRIFT

(11) **EP 0 955 116 B1**
(45) Veröffentlichungstag und Bekanntmachung des Hinweises auf die Patenterteilung: **12.12.2001**
(21) Anmeldenummer: 98108049.2
(22) Anmeldetag: 04.05.1998
(51) Int. Cl.: B23B 1/00, B23B 27/04

(54) **Messerplatte**
Cutting insert
Plaquette de coupe

(43) Veröffentlichungstag der Anmeldung: 10.11.1999
(73) Patentinhaber: Kemmer Hartmetallwerkzeuge GmbH, 72218 Wildberg (DE)
(72) Erfinder: Kemmer, Klaus, 72218 Wildberg (DE)
(74) Vertreter: Grosse, Rainer, Dipl.-Ing.

(56) Entgegenhaltungen:
- DE-A- 1 950 037
- DE-U- 29 503 246
- DE-U- 29 509 664

## Beschreibung

Die Erfindung betrifft eine Messerplatte, insbesondere zum Stech- und Langdrehen, gemäß Oberbegriff des Anspruchs 1.

Aus der DE 295 03 246 U1 ist eine Messerplatte bekannt. Sie weist eine einen Freiwinkel aufweisende Hauptschneide auf. Diese wird durch die Schnittkante einer schrägen Stirnfläche und einer Oberseite der Messerplatte gebildet. Durch den Freiwinkel tritt nicht die gesamte Stirnfläche der Messerplatte mit dem zu bearbeitenden Werkstück zusammen, sondern lediglich die Schnittkante, also die Hauptschneide. Weiterhin weist die bekannte Messerplatte Nebenschneiden auf, die sich beidseitig an die Hauptschneide anschließen. Auch die Nebenschneiden weisen einen Freiwinkel auf, der durch jeweils eine schrägstehende Seitenfläche der Messerplatte gebildet ist. Die Nebenschneiden werden durch die Schnittlinie der entsprechenden Seitenfläche mit der Oberseite der Messerplatte gebildet. Ferner weist die bekannte Messerplatte einen Spanbrecher auf, auf den die von der Hauptschneide und den Nebenschneiden vom Werkstück abgetragenen Späne auftreffen und gebrochen werden.

Die bekannte Messerplatte hat sich beim Einsatz von aus freischneidenden Materialien, insbesondere Automatenstahl, bestehenden Werkstücken bewährt. Weiterhin zeigt die Messerplatte bei Messing, niedriglegierten und hochlegierten Stählen gute Zerspanungseigenschaften. Das heißt, die vom Werkstück abgetragenen Späne weisen eine genügend kurze Spanlänge auf. Darüber hinaus weist die bekannte Messerplatte bei der Bearbeitung der vorgenannten Materialien zufriedenstellende Standzeiten auf. Es hat sich jedoch als nachteilig herausgestellt, daß die im wesentlichen horizontal verlaufenden Schneiden bei einer Bearbeitung von zähen und hart-zähen Materialien relativ schnell verschleißen und daher die Standzeit nicht befriedigend lang ist. Zu den zähen und hart-zähen Materialien seien hier insbesondere rostfreie und/oder hitzebeständige Materialien genannt. Auch bei "exotischen" Legierungen, beispielsweise Inconell, Waspalloy und Castalloy, also stellitischen Materialien, sind die Standzeiten der bekannten Messerplatte nicht ausreichend. Darüber hinaus können keine genügend kurzen Späne abgetragen werden. Dies ist insofern nachteilig, als daß sich lange Späne um Revolverköpfe von Drehmaschinen oder um die Werkzeuge wickeln, so daß die Maschine abgeschaltet und die Späne mühsam entfernt werden müssen.

Aus der DE 295 09 664 U1 ist ein Stecheinsatz bekannt, der die Merkmale des Oberbegriffs des Anspruchs 1 aufweist. Insbesondere weist dieser bekannte Stecheinsatz eine mittlere konkave Spanformmulde auf, die jeweils seitlich durch Spanflächenrandteile begrenzt wird. Ferner ist aus der deutschen Offenlegungsschrift DE 19 50 037 A ein Schneidwerkzeug bekannt, das gekennzeichnet ist durch ein Paar im Abstand gegenüberliegende, äußere Hohlkehl-Schneidkanten mit zur Kopfachse zunehmender Tiefe, die ein Paar äußere Schneidecken bilden, und durch einen mittleren Teil mit einem Paar im Abstand gegenüberliegenden, inneren Hohlkehl-Schneidkanten mit zur Kopfachse zunehmender Tiefe, die ein Paar innere Schneidecken bilden. Dabei können die Vertiefungen bogenförmig ausgebildet sein.

Es ist Aufgabe der Erfindung, eine Messerplatte zum Stech- und Langdrehen anzugeben, die auch bei zähen und hart-zähen Materialien gute Zerspanungseigenschaften zeigt.

Diese Aufgabe wird mit einer Messerplatte, insbesondere zum Stech- und Langdrehen, gelöst, die die Merkmale des Anspruchs 1 aufweist. Die erfindungsgemäße Messerplatte weist zwischen der Hauptschneide und einem Spanbrecher zumindest eine Ausnehmung auf, die in die Oberseite der Messerplatte eingebracht ist. Die Ausnehmung ist zur Hauptschneide beziehungsweise Stirnfläche hin offen ausgebildet, so daß die abfallende und ansteigende Teilschneide durch die Schnittkante der Ausnehmung mit der Stirnfläche gebildet sind. Zwischen jeder Nebenschneide und dem Spanbrecher ist weiterhin jeweils zumindest eine Ausnehmung in der Oberseite der Messerplatte vorgesehen, wobei die Ausnehmung zur zugehörigen Nebenschneide bezeihungsweise Seitenfläche hin offen ausgebildet ist. Somit werden im Bereich der Nebenschneiden die ansteigenden und abfallenden Teilschneiden dadurch gebildet, daß die Schnittlinie der Ausnehmung auf der entsprechenden Seitenfläche liegt. Mit den Ausnehmungen wird sowohl hinter der Hauptschneide als auch hinter den Nebenschneiden eine Spanmulde realisiert, in die die vom Werkstück abgetragenen Späne einlaufen, umgelenkt werden und anschließend am Spanbrecher brechen. Es ergibt sich also quasi ein erhöhter Spanbrecher, der verhindert, daß insbesondere bei zähen und hart-zähen Materialien die Späne über ihn hinweggleiten, und nicht gebrochen werden. Da die Hauptschneide und die Nebenschneiden einen Freiwinkel aufweisen, also die Stirnfläche und die Seitenflächen schräg bezüglich der Oberfläche der Messerplatte verlaufen, gelangen die einzelnen Teilschneiden der Hauptschneide und der Nebenschneiden bei unterschiedlichen Vorschubpositionen der Messerplatte bezüglich eines zu bearbeitenden Werkstücks mit diesem in Eingriff. Dadurch kommen Schneidenbereiche beim Zerspanungsvorgang quasi verspätet in Eingriff mit dem Werkstück. Dadurch weist ein vom Werkstück abgetragener Span einen unterschiedlich dicken Verlauf des Spanquerschnitts auf. Dadurch erhöhen sich die Brucheigenschaften des Span, da die Spandicke beispielsweise von außen nach innen abnimmt. Die Belastung an der Haupt- beziehungsweise Nebenschneide wird daher zur Mitte der Schneide hin auch geringer. Die Standzeiten der Messerplatte werden durch diese Spanaufteilung beziehungsweise durch den unterschiedlichen Spandikkenverlauf erheblich verbessert beziehungsweise der Verschleiß der Messerplatte wird verringert. Durch den erreichten unterschiedlichen Spandickenverlauf werden auch bei zähen und hart-zähen Materialien kurze Spanbrüche erzielt, so daß lange Späne vermieden werden, die sich um Maschinenteile oder Werkzeuge wickeln könnten.

In bevorzugter Ausführungsform ist die Schnittkante, also die Hauptschneide, und die Schnittlinien, also die Nebenschneiden, bogenförmig ausgestaltet, so daß ein Bogensegment eines Bogens die abfallende und das andere Bogensegment die ansteigende Teilschneide bildet. Es werden also eine Hauptschneide und Nebenschneiden gebildet, deren Schneide zur Schneidenmitte hin absinkt. Damit wird ein Span vom Werkstück abgetragen, dessen Spandicke von außen nach innen abnimmt. Insgesamt ergibt sich jedoch gegenüber einer komplett horizontal verlaufenden Schneide eine zumindest bereichsweise geringere Dicke des Spans, so daß dieser sehr leicht brechen kann.

In besonders bevorzugter Ausführungsform ist die Öffnungsweite eines Bogens geringer als die Länge der jeweiligen Schnittkante (Hauptschneide) beziehungsweise Schnittlinie (Nebenschneide). Somit werden horizontal verlaufende Teilschneiden und die erfindungsgemäßen abfallenden und ansteigenden Teilschneiden realisiert.

In einer Weiterbildung der Erfindung ist vorgesehen, daß die Hauptschneide und/oder die Nebenschneiden jeweils mehrere abfallende und ansteigende Teilschneiden aufweisen. Dadurch ist es möglich, Späne mit einem vorzugsweise wellenförmigen Spanquerschnitt zu erzeugen. Da also mehrere Teilschneiden vorgesehen sind, verlängert sich die Berührungslinie zwischen der Hauptschneide und/oder der Nebenschneiden und dem Werkstück, so daß die abgetragenen Späne stärker erwärmt werden. In Verbindung mit dem wellenförmigen Spanquerschnitt und der Zerspanungswärme wird ein sehr kurzer Spanbruch erzielt.

In bevorzugter Ausführungsform werden -sofern mehrere abfallende und ansteigende Teilschneiden an einer Schneide realisiert werden sollen- die Teilschneiden durch mehrere nebeneinanderliegende Bogen und Erhebungen gebildet. Es wird somit eine wellenförmige Schneide bei der Hauptschneide und/oder den Nebenschneiden gebildet.

In einer Weiterbildung der Erfindung ist vorgesehen, daß der Verlauf der Bogen und Erhebungen sinusförmig ist. Das heißt, die Hauptschneide und/oder die Nebenschneiden verlaufen zumindest bereichsweise nach Art einer Sinuswelle. Es werden also auch hier eine Hauptschneide und/oder Nebenschneiden gebildet, die Teilschneiden auf unterschiedlichem Niveau aufweisen. Dadurch werden Späne mit unterschiedlichem Spandickenverlauf abgetragen, die leicht brechen. Somit kann auch hier ein genügend kurzer Spanbruch erreicht werden. Zudem wird insgesamt ein dünner Span vom Werkstück abgetragen, der in Verbindung mit der an der Schneide erzeugten Wärme eine erhöhte Bruchempfindlichkeit aufweist.

In einer Weiterbildung der Erfindung ist vorgesehen, daß der Spanbrecher bogenförmig auf der Oberseite der Messerplatte realisiert ist, wobei dessen Bogenöffnung der Hauptschneide zugewandt ist. Der Spanbrecher weist eine halbmondförmige Kontur auf, wobei -in bevorzugter Ausführungsform- die der Hauptschneide zugeordnete Ausnehmung der Bogeninnenseite des Spanbrechers zugeordnet ist und die den Nebenschneiden zugeordneten Ausnehmungen außerhalb des Bogens des Spanbrechers liegen.

Weitere Ausgestaltungen ergeben sich aus den Unteransprüchen.

Für das Verständnis der Erfindung nützliche Ausführungsbeispiele werden mit Bezug auf die Zeichnung näher erläutert. Die Figuren der Zeichnung tragen lediglich zum Verständnis der Erfindung bei, wobei die dort dargestellten Schneideinsätze jedoch keine Ausführungsformen der in Anspruch 1 definierten Schneideinsätze sind. Es zeigen:
- Figur 1: eine Draufsicht auf die Oberseite eines ersten Ausführungsbeispiels einer Messerplatte,
- Figur 2: eine Stirnansicht der Messerplatte gemäß Figur 1,
- Figur 3: in Draufsicht auf die Oberseite ein zwei tes Ausführungsbeispiel einer Messerplatte,
- Figur 4: eine Stirnansicht der Messerplatte gemäß Figur 3,
- Figur 5: ein drittes Ausführungsbeispiel einer Messerplatte,
- Figur 6: eine Stirnansicht der Messerplatte gemäß Figur 5,
- Figur 7: eine Schnittdarstellung der Messerplatte entlang der Linie VII-VII in Figur 3, und
- Figuren 8 und 9: je ein Ausführungsbeispiel einer Messerplatte in Seitenansicht.

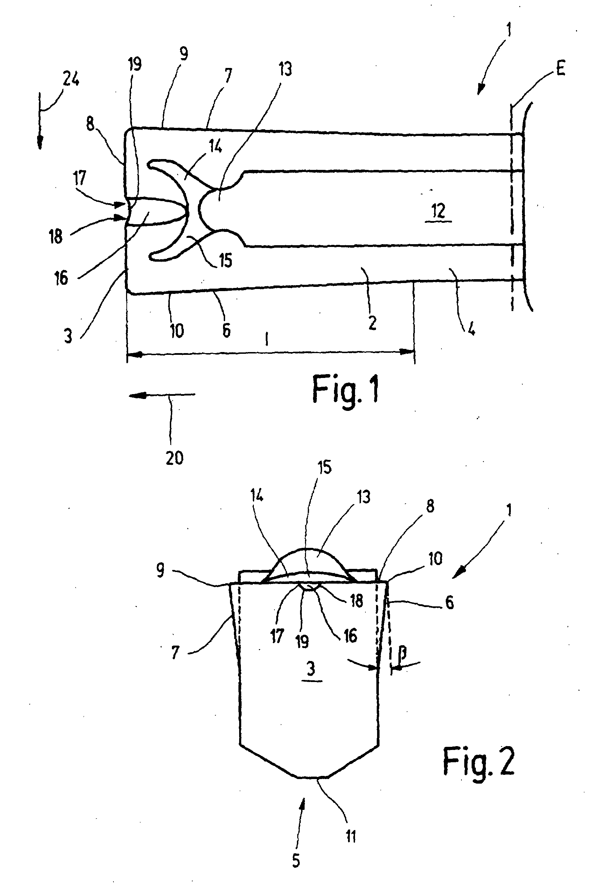

Anhand der Figuren 1 und 2 wird ein erstes Ausführungsbeispiel einer Messerplatte 1 beschrieben. In Figur 1 ist die Messerplatte 1 in Draufsicht auf ihre Oberseite 2 dargestellt. Die Messerplatte 1 ist als Wende-Messerplatte ausgebildet. Das heißt, sie ist zu einer Mittelebene E spiegelsymmetrisch ausgebildet. In Figur 2 ist die Messerplatte 1 in Frontansicht auf ihre Stirnfläche 3 wiedergegeben.

Die Messerplatte 1 weist einen Grundkörper 4 auf, der die Oberseite 2, eine Unterseite 5, zwei sich gegenüberliegende, schräg verlaufende Seitenflächen 6 und 7 und zwei schräg verlaufende, sich gegenüberliegende Stirnflächen aufweist, wobei lediglich die Stirnfläche 3 dargestellt ist.

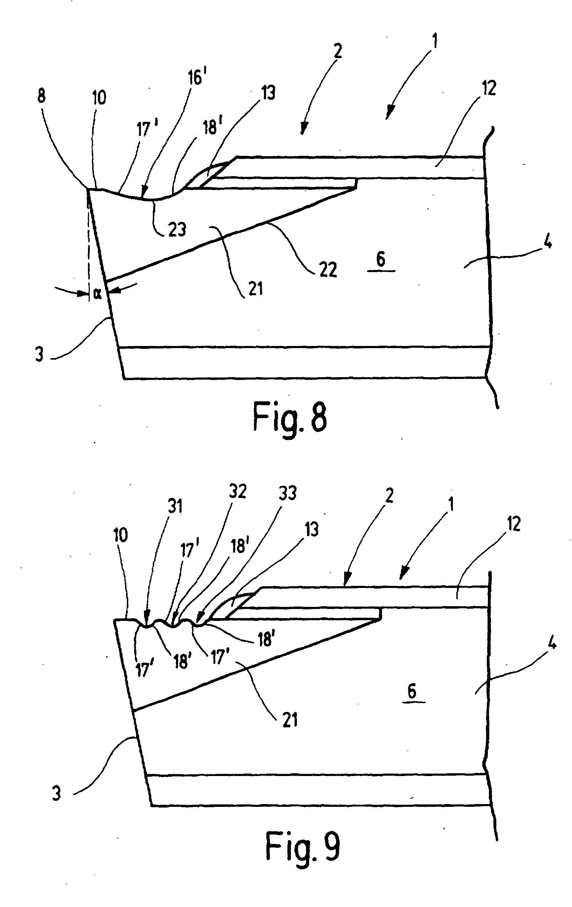

Die Schnittkante zwischen der Oberseite 2 und der Stirnfläche 3 bildet eine Hauptschneide 8, an die sich beidseitig Nebenschneiden 9 und 10 anschließen. Die Nebenschneiden 9 und 10 werden jeweils durch die Schnittlinie zwischen einer Seitenfläche 6 beziehungsweise 7 und der Oberseite 2 gebildet. Die Nebenschneiden 9 und 10 erstrecken sich entlang des Grundkörpers 4 über die Länge 1. Die Hauptschneide 8 und die Nebenschneiden 9 und 10 weisen einen Freiwinkel α beziehungsweise β auf, wobei der entsprechende Freiwinkel durch die schräg verlaufende Stirnfläche 3 beziehungsweise durch die schräg verlaufenden Seitenflächen 6 und 7 gebildet wird. Der Freiwinkel β der Nebenschneiden beträgt vorzugsweise 6°. Der Freiwinkel α der Hauptschneide 8 beträgt vorzugsweise 7°. Dieser Freiwinkel α ist in Figur 9 dargestellt.

Die Unterseite 5 der Messerplatte 1 weist eine V-förmige Kontur mit einer abgeflachten Spitze 11 auf. Auf der Oberseite 2 der Messerplatte 1 ist eine Spannrippe 12 vorgesehen, die die Oberseite 2 überragt. Diese Spannrippe erstreckt sich in Längsrichtung der Messerplatte 1 und ist mittig auf der Oberseite 2 angeordnet. Sie dient zusammen mit der abgeflachten Spitze 11 dazu, daß die Messerplatte 1 in einem hier nicht dargestellten Messerplattenhalter sicher gehalten werden kann. Der der Hauptschneide 8 zugewandte Endbereich der Spannrippe 12 geht in eine kuppenförmige Zwischenzone 13 über, die einen Übergang vom Endbereich der Spannrippe 12 zu einer Spanleitrippe 14 bildet. Diese Spanleitrippe 14 bildet einen Spanbrecher 15 für die von einem Werkstück mittels der Hauptschneide 8 und den Nebenschneiden 9 und 10 abgetragenen Späne. Der Spanbrecher 15 überragt die Oberseite 2 der Messerplatte 1, weist jedoch ein geringeres Niveau als die Spannrippe 12 auf.

Die Hauptschneide 8 weist verschiedenartig ausgebildete Schneidenbereiche auf. Etwa in der Mitte der Hauptschneide 8 ist eine Ausnehmung 16 in die Oberseite 2 eingebracht. Die Ausnehmung 16 erstreckt sich von der Hauptschneide 8 bis zur Innenseite des bogenförmig ausgeführten Spanbrechers 15. Durch die Ausnehmung 16 werden Teilschneiden 17 und 18 der Hauptschneide 8 gebildet, wobei die Teilschneide 17 -von der Oberseite 2 aus betrachtetals abfallende Teilschneide ausgebildet ist, die dann in die ansteigende Teilschneide 18 übergeht, die wieder auf der Oberseite 2 endet. Mithin weist die Hauptschneide 8 waagrecht beziehungsweise horizontal verlaufende Schneidenbereiche und eben die abfallende und ansteigende Teilschneiden 17 und 18 auf. Dadurch, daß die Hauptschneide 8 den Freiwinkel α aufweist, also die Stirnfläche 3 schräg verläuft, liegen die Teilschneiden 17 und 18 bezüglich der waagrecht verlaufenden Schneidenbereiche der Hauptschneide 8 etwas zurückversetzt.

Die Teilschneiden 17 und 18 werden hier durch die bogenförmig ausgestaltete Schnittkante gebildet, die durch die Kontur der Ausnehmung 16 realisiert ist. Es zeigt sich, daß -ausgehend von einer gedachten Mittellinie der Ausnehmung 16- die Teilschneide 17 von einem Bogensegment des Bogens 19 und die Teilschneide 18 von dem anderen Bogensegment -in der Figur 1 unterhalb der gedachten Mittellinie- gebildet wird. Die Kontur und die Tiefe der Ausnehmung 16 ist derart gewählt, daß die Öffnungsweite des Bogens 19 geringer ist als die Länge der Schnittkante, also der gesamten Hauptschneide 8. In bevorzugter Ausführungsform ist der Bogen 19 ein Kreisbogen.

Beim sogenannten Stechdrehen mit der Messerplatte 1 wird diese in Vorschubrichtung 20 mit einem zu bearbeitenden, rotierenden Werkstück in Eingriff gebracht. Dadurch, daß die Teilschneiden 17 und 18 bezüglich der horizontal verlaufenden Schneidenbereiche der Hauptschneide 8 etwas zurückverlagert sind, gelangen zunächst diese horizontal verlaufenden Schneidenbereiche mit dem Werkstück in Eingriff. Bei der weiteren Vorschubbewegung gelangen nun auch die Teilschneiden 17 und 18 an das Werkstück. Die mit der Hauptschneide 8 abgetragenen Späne weisen daher einen Spanquerschnitt auf, der im Bereich des Bogens 19 dünner ist als im Bereich der horizontal verlaufenden Schneidenbereiche der Hauptschneide 8. Der abgetragene Span trifft auf die Innenseite des Bogens der Spanleitrippe 14 und kann hier leicht gebrochen werden, da -wie bereits erwähnt- der Querschnitt, also sein Profil, in der Spanmitte dünner ist. Es liegt also eine Materialschwächung des Spans vor, so daß dieser leicht am Spanbrecher 15 gebrochen werden kann. Die Späne brechen dabei relativ kurz, so daß diese leicht von der Messerplatte 1 abtransportiert werden können. Es entstehen also keine langen Späne, die sich um das Werkstück, die Messerplatte oder um Maschinenteile wickeln könnten, wodurch Betriebsstörungen entstehen können.

Sofern die Messerplatte 1 lediglich zum sogenannten Stechdrehen verwendet wird, genügt es, wenn die Hauptschneide 8 die Teilschneiden 17 und 18 aufweist. Insbesondere dann, wenn mit der Messerplatte 1 sogenannte zähe und hart-zähe Materialien zerspant werden sollen. Sofern die Messerplatte 1 für diese Materialien zum Stech- und Langdrehen verwendet werden soll, weisen die Nebenschneiden 9 und 10 entsprechend ausgestaltete Teilschneiden 17' und 18' auf, wie diese im Zusammenhang mit der Hauptschneide 8 vorstehend erläutert wurden. In den Figuren 8 und 9 ist jeweils ein Ausführungsbeispiel einer Nebenschneide mit den Teilschneiden 17' und 18' wiedergegeben.

Figur 8 zeigt ein erstes Ausführungsbeispiel einer zumindest eine abfallende und eine ansteigende Teilschneide 17' beziehungsweise 18' aufweisenden Nebenschneide 10 der Messerplatte 1. Es ist ersichtlich, daß die Seitenfläche 6 eine dreieckförmige Freifläche 21 aufweist, die auf der Seitenfläche 6 von ihrer unteren Begrenzungskante 22 in Richtung auf die Oberseite 2 vorzugsweise stetig ansteigt, so daß der Freiwinkel β (Figur 2) der Nebenschneide 10 gebildet ist. Die Nebenschneide 10 weist -wie eingangs erwähnt- eine abfallende Teilschneide 17' und eine ansteigende Teilschneide 18' auf. Die beiden Teilschneiden 17' und 18' gehen in einem vorzugsweise als Kreisbogen ausgeführten Bogen 23 ineinander über. Durch den Freiwinkel β und den Bogen 23 beziehungsweise die Teilschneiden 17' und 18' weist auch die Nebenschneide 10 Schneidenbereiche auf, die auf unterschiedlichen Höhen liegen, wobei die Teilschneiden 17' und 18' gegenüber den anderen Schneidenbereichen etwas zurückversetzt sind. Somit treten die Teilschneidenbereiche der Nebenschneide 10 beim Langdrehen in Vorschubrichtung 24 (Figur 1) bei unterschiedlichen Vorschubpositionen mit dem zu bearbeitenden Werkstück in Eingriff, so daß auch mit der Nebenschneide 10 Späne abgetragen werden, die in ihrem Querschnitt unterschiedlich dick beziehungsweise dünn sind. Dadurch wird auch bei den durch die Nebenschneide 10 abgetragenen Spänen ein kurzer Spanbruch bei den zähen und hart-zähen Materialien erreicht.

Die Teilschneiden 17' und 18' der Nebenschneide 10 werden durch eine Ausnehmung 16' gebildet, die somit den Bogen 23 bildet. In Verbindung mit dem Freiwinkel β liegen die Teilschneiden 17' und 18' bezüglich der waagrecht verlaufenden Schneidenbereiche der Nebenschneide 10 -wie bereits erwähntetwas zurückversetzt, also in die Zeichnungsebene hinein.

Damit die Messerplatte 1 zum Stech- und Langdrehen bei hart-zähen und zähen Materialien verwendet werden kann, weist die Messerplatte 1 gemäß Figur 1 vorzugsweise eine Nebenschneide 10 auf, wie sie vorstehend im Zusammenhang mit Figur 8 beschrieben wurde. Selbstverständlich ist die Nebenschneide 9 der Messerplatte 1 entsprechend ausgebildet wie die Nebenschneide 10 gemäß Figur 8, so daß auch entgegen der Vorschubrichtung 24 ein Langdrehen an einem zu bearbeitenden Werkstück möglich ist. Auch bei der Nebenschneide 9 beziehungsweise 10 werden !die Teilschneiden 17' und 18' jeweils durch Bogensegmente des Bogens 23 gebildet, wie dies im Zusammenhang mit der Hauptschneide 8 bereits beschrieben ist.

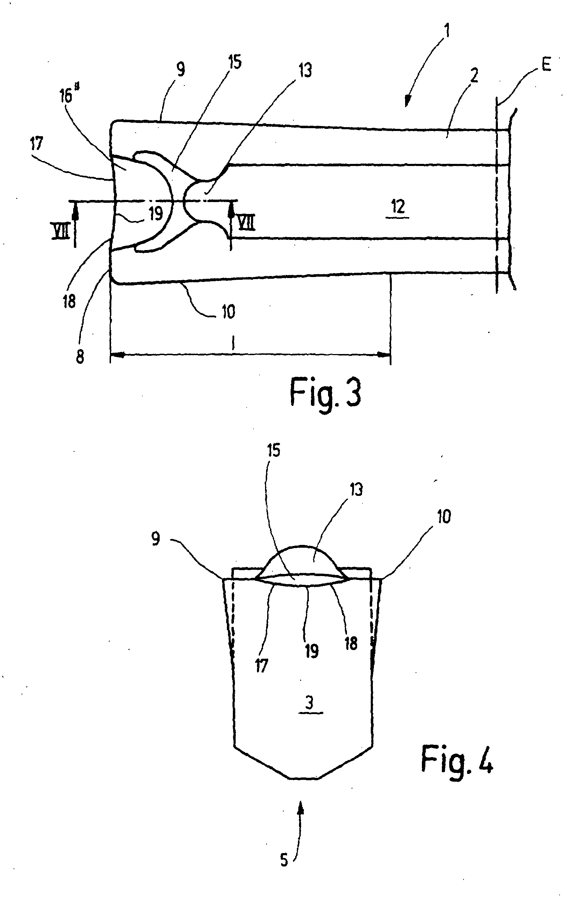

In Figur 3 ist in Draufsicht auf die Oberseite 2 ein zweites Ausführungsbeispiel einer Messerplatte 1 dargestellt. Gleiche Teile, die mit der Messerplatte 1 gemäß Figur 1 bereits beschrieben wurden, sind in Figur 3 mit denselben Bezugszeichen versehen. Insofern wird auf deren Beschreibung verwiesen.

Die Messerplatte 1 in Figur 3 weist gegenüber der Messerplatte 1 gemäß Figur 1 eine verbreiterte Ausnehmung 16'' auf, so daß auch hier abfallende und ansteigende, jedoch längere Teilschneiden 17 und 18 an der Hauptschneide 8 gebildet werden. Es ist ersichtlich, daß die Ausnehmung 16'' an die bogenförmige Innenseite des Spanbrechers 15 angepaßt ist. Somit werden die von der Hauptschneide 8 abgetragenen Späne in die Ausnehmung 16'' eingeleitet und treffen dabei auf die Innenseite des bogenförmigen Spanbrechers 15. Darüber hinaus wird durch die verbreiterten Teilschneiden 17 und 18 eine weitere Ausdünnung des vom Werkstück abgetragenen Spans erreicht, so daß dieser an dem Spanbrecher 15 sehr leicht brechen kann, wodurch sehr kurze Späne entstehen, die leicht vom Werkstück beziehungsweise von der Messerplatte 1 abtransportiert werden können. Die Nebenschneiden 9 und 10 der Messerplatte 1 gemäß Figuren 3 und 4 können also als Teilschneiden aufweisende Nebenschneiden ausgebildet sein, wie dies im Zusammenhang mit der Figur 8 bereits beschrieben wurde. In Figur 4, die die Messerplatte 1 der Figur 3 in Stirnansicht zeigt, ist der Bogen 19 ersichtlich, der als Kreisbogen ausgebildet sein kann.<Die Kontur des Bogens 19 wird durch die Form und Tiefe der Ausnehmung 16'' bestimmt.

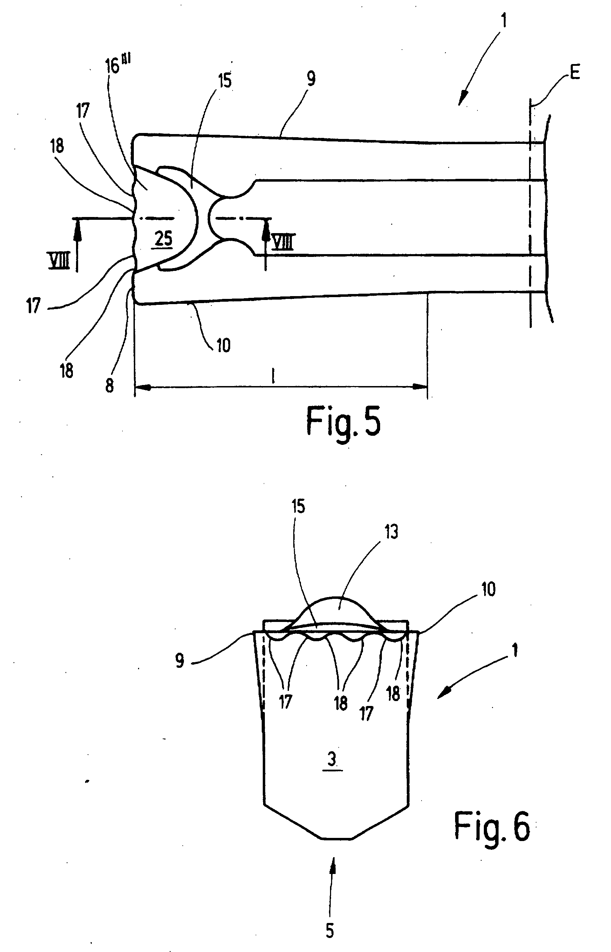

Die Figuren 5 und 6 zeigen ein weiteres Ausführungsbeispiel einer Messerplatte 1. Gleiche Teile wie in den übrigen Figuren 1 bis 4 sind hier mit den gleichen Bezugszeichen versehen, so daß auf deren nochmalige Beschreibung verzichtet wird.

Die Messerplatte 1 gemäß Figur 5 weist eine Ausnehmung 16''' auf, deren Grund 25 wellenförmig realisiert ist. Somit ergeben sich mehrere abfallende und ansteigende Teilschneiden 17 und 18. Dadurch wird eine weitere Querschnittsschwächung des von einem Werkstück abgetragenen Spans erreicht, so daß dieser am Spanbrecher 15 leicht brechen kann, wodurch wiederum ein kurzer Spanbruch erreicht wird.

Die Breite der Ausnehmung 16''' im Bereich der Hauptschneide 8 entspricht im wesentlichen der Bogenbreite der Innenseite des Spanbrechers 15, so daß auch beim Ausführungsbeispiel der Messerplatte 1 gemäß Figur 5 noch waagrechte Schneidenbereiche an der Hauptschneide 8 vorliegen.

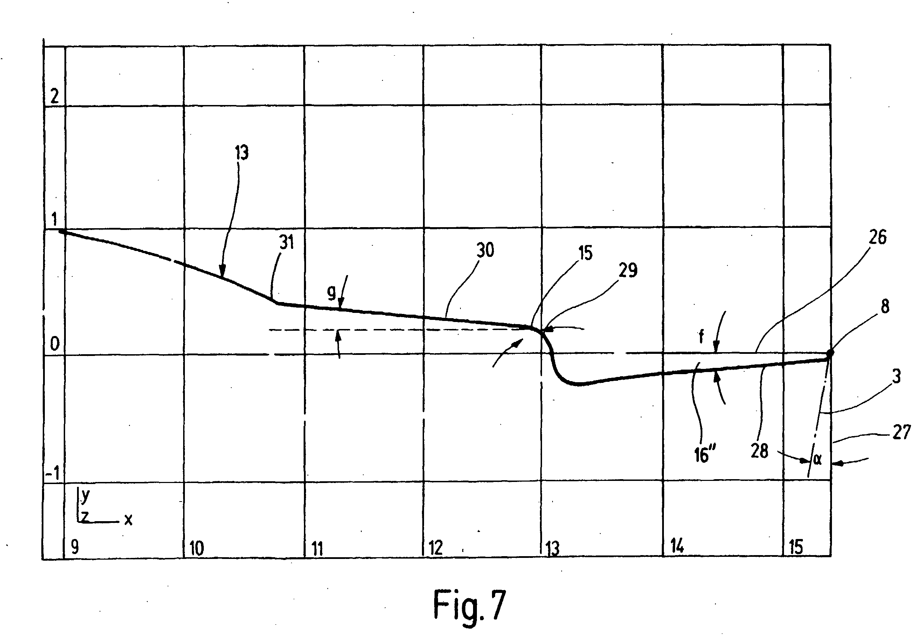

In Figur 7 ist eine Schnittdarstellung der Messerplatte gemäß Figur 3 entlang der Linie VII-VII wiedergegeben. Anhand der Figur 7 soll auf die einzelnen Winkelverhältnisse der Messerplatte im Bereich der Hauptschneide 8 eingegangen werden. Die Schnittebene liegt parallel zu den Seitenflächen 6 und 7 der Messerplatte 1, wobei der tiefste Punkt der Hauptschneide 8 in der Schnittebene liegt. Um die Größenverhältnisse besser darstellen zu können, sind Längs- und Querlinien in Figur 7 eingezeichnet, die ein Raster bilden. Auf einer waagrecht verlaufenden Linie 26 liegt die Hauptschneide 8 der Messerplatte 1. Strichpunktiert dargestellt ist die Stirnfläche 3, die mit einer vertikal verlaufenden Linie 27 den Freiwinkel α der Hauptschneide 8 einschließt. Wie bereits erwähnt, beträgt der Freiwinkel α vorzugsweise 7°. Die von der Hauptschneide 8 ausgehende Linie 28 stellt den Grund der Ausnehmung 16'' dar. Diese Linie 28 beziehungsweise der Grund schließt mit der Linie 26 einen Winkel f ein, der vorzugsweise 5° bis 6° betragen kann. In seinem weiteren Verlauf fällt der Grund beziehungsweise die Linie 28 stetig ab und erreicht an ihrem Ende beim Spanbrecher 15 ihren tiefsten Punkt. In ihrem weiteren Verlauf steigt die Linie 28 steil, insbesondere nahezu senkrecht in einem Winkel zwischen ca. 75° und 80° an, um anschließend in eine schwächer ansteigende Linie 30 überzugehen. Der Anstiegswinkel g der Linie 30 beträgt ca. 6° und kennzeichnet einen Spanleitwinkel. Ausgehend von einem Punkt 31 geht die Linie 30 in die kuppenförmige Zwischenzone 13 über.

In Figur 9 ist in Seitenansicht ein weiteres Ausführungsbeispiel einer Nebenschneide 10 einer Messerplatte 1 wiedergegeben. Gleiche Teile wie in Figur 8 dargestellt, sind mit denselben Bezugzeichen versehen. Im Unterschied zum Ausführungsbeispiel der Messerplatte 1 gemäß Figur 8 weist die Nebenschneide 10 hier mehrere abfallende und ansteigende Teilschneiden 17' und 18' auf. Die Schneide der Nebenschneide 10 weist somit einen wellenförmigen Bereich auf, an den sich -im Bild links und rechtsjeweils ein waagrechter Schneidenbereich anschließt. In besonders bevorzugter Ausführungsform wird die Nebenschneide 10 gemäß Figur 9 bei einer Messerplatte 1 verwendet, wie sie im Zusammenhang mit der Figur 5 beschrieben ist. Somit weisen die Hauptschneide 8 und die Nebenschneiden 9 und 10 die wellenförmig ausgestalteten Teilschneiden auf.

In bevorzugter Ausführungsform ist vorgesehen, daß der Verlauf der wellenförmigen Teilschneiden der Hauptschneide 8 und der Nebenschneiden 9 beziehungsweise 10 durch Bogen und Erhebungen gebildet werden, die sowohl die Kontur eines Kreisbogens also auch dem Verlauf einer Sinus-Funktion folgen können. Die einzelnen Ausnehmungen 31, 32 und 33 sowie die entsprechend dazwischen liegenden Erhebungen weisen insgesamt eine Breite auf, die geringer ist als die Gesamtlänge der Nebenschneide 10. Die Ausnehmungen 31, 32 und 33 sowie die Ausnehmung 16' (Figur 8) sind zur Seitenfläche 6 beziehungsweise zur Nebenschneide 10 offen ausgebildet und erstrecken sich vorzugsweise bis zum Spanbrecher 15, so daß in den Ausnehmungen die Späne bis zum Spanbrecher 15 bewegt werden können, um anschließend am Spanbrecher gebrochen zu werden. Insgesamt ergibt sich sowohl für die mit Teilschneiden ausgestatteten Haupt- und Nebenschneiden -insbesondere bei Verwendung der Messerplatte 1 bei zähen und hart-zähen Materialien- ein kurzer Spanbruch, da die abgetragenen Späne in ihrem Querschnitt geschwächt sind.

Schließlich sei noch angemerkt, daß die zumindest bereichsweise wellenförmig ausgestaltete Hauptschneide 8 der Messerplatte 1 gemäß Figur 5 auch derart ausgebildet sein kann, daß ein Wellental in der Mitte der Hauptschneide 8 liegt. In Figur 5 liegt der höchste Punkt eines Wellenberges beziehungsweise einer Erhebung in der Mitte der Hauptschneide 8.

Die im Zusammenhang mit den Figuren 8 und 9 beschriebenen Ausgestaltungen der Nebenschneiden 10 sind selbstverständlich auch für die Nebenschneiden 9 vorgesehen. Die mit Teilschneiden 17' und 18' ausgestalteten Nebenschneiden 9 und 10 sind an den Messerplatten 1 der Figuren 1 bis 6 vorgesehen, sofern mit den Messerplatten ein Stechund Langdrehen an einem zu bearbeitenden Werkstück durchzuführen ist.

## Patentansprüche

1. Messerplatte, insbesondere zum Stech- und Langdrehen, mit einer einen Freiwinkel (α) aufweisenden Hauptschneide (8), die durch die Schnittkante einer Stirnfläche (3) und einer Oberseite der Messerplatte (1) gebildet ist, mit beidseitig an die Hauptschneide (8) anschließenden, einen Freiwinkel (β) aufweisenden Nebenschneiden (9,10), die jeweils durch die Schnittlinie einer Seitenfläche (6,7) und der Oberseite gebildet werden, und mit einem Spanbrecher (15) für die von der Hauptschneide (8) und den Nebenschneiden (9,10) von einem Werkstück abgetragenen Späne, wobei die Hauptschneide (8) und die Nebenschneiden (9,10) -in Draufsicht auf die Messerplatte (1) gesehen- jeweils zumindest eine abfallende Teilschneide (17,17') aufweisen, an die sich jeweils eine ansteigende Teilschneide (18,18') anschließt, **dadurch gekennzeichnet, daß** zwischen der Hauptschneide (8) und dem Spanbrecher (15) zumindest eine Ausnehmung (16,16'') in die Oberseite (2) der Messerplatte (1) eingebracht ist, die zur Hauptschneide (8) hin offen ausgebildet ist, so daß die abfallende und ansteigende Teilschneide (17,18) durch die Schnittkante der Ausnehmung (16,16'') mit der Stirnfläche (3) gebildet sind, und daß jeweils zwischen den Nebenschneiden (9,10) und dem Spanbrecher (15) zumindest eine Ausnehmung (16',31,32,33) in der Oberseite (2) vorgesehen ist, die zur zugehörigen Nebenschneide (9,10) hin offen ausgebildet ist, so daß die abfallende und ansteigende Teilschneide (17',18') der jeweiligen Nebenschneide (9,10) durch die Schnittlinie der Ausnehmung (16',31,32,33) mit der entsprechenden Seitenfläche (6,7) gebildet sind.

2. Messerplatte nach Anspruch 1, **dadurch gekennzeichnet, daß** die abfallende und ansteigende Teilschneide (17,17';18,18') der jeweiligen Schneiden (Hauptschneide und Nebenschneiden) durch eine zumindest bereichsweise bogenförmig ausgestaltete Schnittkante beziehungsweise Schnittlinie gebildet sind, wobei die Bogensegmente eines Bogens (19;23) jeweils die abfallende und ansteigende Teilschneide (17,17';18,18') bilden.

3. Messerplatte nach einem der vorhergehenden Ansprüche, **dadurch gekennzeichnet, daß** die Öffnungsweite eines Bogens (19,23) geringer ist als die Länge der jeweiligen Schnittkante (Hauptschneide) beziehungsweise Schnittlinie (Nebenschneide).

4. Messerplatte nach einem der vorhergehenden Ansprüche, **dadurch gekennzeichnet, daß** die Bogen (19,23) Kreisbogen sind.

5. Messerplatte nach einem der vorhergehenden Ansprüche, **dadurch gekennzeichnet, daß** die Hauptschneide (8) und/oder die Nebenschneiden (9,10) jeweils mehrere abfallende und ansteigende Teilschneiden (17,17';18,18') aufweisen.

6. Messerplatte nach Anspruch 5, **dadurch gekennzeichnet, daß** die Teilschneiden (17,17';18,18') der Hauptschneide (8) und/oder der Nebenschneiden (9,10) durch mehrere nebeneinanderliegende Bogen und Erhebungen gebildet werden.

7. Messerplatte nach einem der vorhergehenden Ansprüche, **dadurch gekennzeichnet, daß** der Verlauf der Bogen (19,23) und Erhebungen sinusförmig oder kreisbogenförmig ist.

8. Messerplatte nach einem der vorhergehenden Ansprüche, **dadurch gekennzeichnet, daß** sich die Ausnehmungen (16,16'';16',31,32,33) über den gesamten Bereich zwischen der jeweiligen Schneide (Hauptschneide beziehungsweise Nebenschneide) und dem Spanbrecher (15) erstrecken.

9. Messerplatte nach einem der vorhergehenden Ansprüche, **dadurch gekennzeichnet, daß** der Spanbrecher (15) bogenförmig auf der Oberseite (2) der Messerplatte (1) realisiert ist, wobei dessen Bogenöffnung der Hauptschneide (8) zugewandt ist.

10. Messerplatte nach einem der vorhergehenden Ansprüche, **dadurch gekennzeichnet, daß** die der Hauptschneide (8) zugeordnete Ausnehmung (16,16'') an der Bogeninnenseite des Spanbrechers (15) liegt und die den Nebenschneiden zugeordneten Ausnehmungen (16',31,32,33) außerhalb des Bogens des Spanbrechers (15) liegen.

## Claims

1. Cutter tip, in particular for cutting-off and longitudinal turning, having a main cutting edge (8) which has a clearance angle (α) and is formed by the intersection edge of an end face (3) and a top side of the cutter tip (1), having secondary cutting edges (9,10) which adjoin the main cutting edge (8) on both sides, have a clearance angle (β) and are each formed by the intersection line of a side face (6,7) and the top side, and having a chip breaker (15) for the chips removed from a workpiece by the main cutting edge (8) and the secondary cutting edges (9,10), the main cutting edge (8) and the secondary cutting edges (9,10) - as viewed in plan view of the cutter tip (1) - in each case having at least one falling partial cutting edge (17,17'), adjoining which in each case is a rising partial cutting edge (18,18'), **characterized in that** at least one recess (16,16'') is made in the top side (2) of the cutter tip (1) between the main cutting edge (8) and the chip breaker (15), this recess (16,16'') being designed so as to be open towards the main cutting edge (8), so that the falling and rising partial cutting edges (17,18) are formed by the intersection edge between the recess (16,16'') and the end face (3), and **in that** at least one recess (16',31,32,33) is provided in the top side (2) in each case between the secondary cutting edges (9,10) and the chip breaker (15), this recess (16',31,32,33) being designed so as to be open towards the associated secondary cutting edge (9,10), so that the falling and rising partial cutting edges (17',18') of the respective secondary cutting edge (9,10) are formed by the intersection line between the recess (16',31,32,33) and the corresponding side face (6,7).

2. Cutter tip according to Claim 1, **characterized in that** the falling and rising partial cutting edges (17,17';18,18') of the respective cutting edges (main cutting edge and secondary cutting edges) are formed by an intersection edge or intersection line formed in an arc shape at least in a certain region, the arc segments of an arc (19;23) in each case forming the falling and rising partial cutting edges (17,17';18,18').

3. Cutter tip according to one of the preceding claims, **characterized in that** the opening width of an arc (19,23) is smaller than the length of the respective intersection edge (main cutting edge) or intersection line (secondary cutting edge).

4. Cutter tip according to one of the preceding claims, **characterized in that** the arcs (19,23) are arcs of a circle.

5. Cutter tip according to one of the preceding claims, **characterized in that** the main cutting edge (8) and/or the secondary cutting edges (9,10) in each case have a plurality of falling and rising partial cutting edges (17,17';18,18').

6. Cutter tip according to Claim 5, **characterized in that** the partial cutting edges (17,17'; 18,18') of the main cutting edge (8) and/or of the secondary cutting edges (9,10) are formed by a plurality of arcs and prominences lying side by side.

7. Cutter tip according to one of the preceding claims, **characterized in that** the course of the arcs (19,23) and prominences is sinusoidal or circular-arc-shaped.

8. Cutter tip according to one of the preceding claims, **characterized in that** the recesses (16, 16'';16',31,32,33) extend over the entire region between the respective cutting edge (main cutting edge or secondary cutting edge) and the chip breaker (15).

9. Cutter tip according to one of the preceding claims, **characterized in that** the chip breaker (15) is realized in an arc shape on the top side (2) of the cutter tip (1), its arc opening facing the main cutting edge (8).

10. Cutter tip according to one of the preceding claims, **characterized in that** the recess (16, 16'') assigned to the main cutting edge (8) lies on the inside of the arc of the chip breaker (15), and the recesses (16',31,32,33) assigned to the secondary cutting edges lie outside the arc of the chip breaker (15).

## Revendications

1. Plaquette de coupe notamment pour le tronçonnage et le tournage longitudinal comprenant une arête principale (8) avec un angle de dépouille (α), cette arête étant formée par l'arête de coupe d'une surface frontale (3) et d'une face supérieure de la plaquette de coupe (1), avec de part et d'autre de l'arête principale (8), des arêtes auxiliaires (9, 10) ayant un angle de dépouille (β), ces arêtes étant formées par la ligne d'intersection d'une surface latérale (6, 7) et de la face supérieure ainsi qu'un brise-copeaux (15) pour les copeaux dégagés par l'arête principale (8) et les arêtes auxiliaires (9, 10) de l'outil,
l'arête principale (8) et les arêtes auxiliaires (9, 10) (vues en vue de dessus de la plaquette de coupe (1)) ont chaque fois au moins une arête partielle descendante (17, 17') suivie d'une arête partielle montante (18, 18') respective,
**caractérisée en ce qu'**
entre l'arête principale (8) et le brise-copeaux (15), la face supérieure (2) de la plaquette de coupe (1), a au moins une cavité (16, 16'') étant ouverte en direction de l'arête principale (8) pour que les arêtes de coupe partielles descendantes et montantes (17, 18) soient formées par l'arête de coupe de la cavité (16, 16'') et de la surface frontale (3) et
chaque fois entre les arêtes auxiliaires (9, 10) et le brise-copeaux (15), la face supérieure (2) a au moins une cavité (16', 31, 32, 33) restant ouverte vers l'arête auxiliaire correspondante (9, 10) de façon que les arêtes de coupe descendantes et montantes (17', 18') de l'arête auxiliaire respective (9, 10) soient formées par la ligne d'intersection de la cavité (16', 31, 32, 33) et de la surface latérale (6, 7) correspondante.

2. Plaquette de coupe selon la revendication 1,
**caractérisée en ce que**
les arêtes partielles descendantes et montantes (17, 17' ; 18, 18') de l'arête respective (arête principale et arêtes auxiliaires) sont formées par au moins une arête de coupe ou ligne de coupe courbée par endroits, et les segments courbes d'un arc (19, 23) forment chaque fois l'arête de coupe descendante et l'arête de coupe montante (17, 17' ; 18, 18').

3. Plaquette de coupe selon l'une des revendications précédentes,
**caractérisée en ce que**
l'ouverture d'un arc (19, 23) est inférieure à la longueur de l'arête de coupe respective (arête de coupe principale) ou de la ligne de coupe (arête de coupe auxiliaire).

4. Plaquette de coupe selon l'une des revendications précédentes,
**caractérisée en ce que**
les arcs (19, 23) sont des arcs de cercle.

5. Plaquette de coupe selon l'une des revendications précédentes,
**caractérisée en ce que**
l'arête de coupe principale (8) et/ou les arêtes auxiliaires (9, 10) comportent chaque fois plusieurs arêtes partielles descendantes et montantes (17, 17' ; 18, 18').

6. Plaquette de coupe selon la revendication 5,
**caractérisée en ce que**
les arêtes partielles (17, 17' ; 18, 18') de l'arête principale (8) et/ou des arêtes auxiliaires (9, 10) sont formées par plusieurs arcs et bossages juxtaposés.

7. Plaquette de coupe selon l'une des revendications précédentes,
**caractérisée en ce que**
le tracé des arcs (19, 23) des bossages et de forme sinusoïdale ou en arc de cercle.

8. Plaquette de coupe selon l'une des revendications précédentes,
**caractérisée en ce que**
les cavités (16, 16'' ; 16', 31, 32, 33) s'étendent sur toute la plage entre l'arête respective (arête de coupe principale ou arête de coupe auxiliaire) et le brise-copeaux (15).

9. Plaquette de coupe selon l'une des revendications précédentes,
**caractérisée en ce que**
le brise-copeaux (15) est réalisé sous la forme d'un arc sur la face supérieure (2) de la plaquette de coupe (1) et l'ouverture de l'arc est tournée vers l'arête principale (8).

10. Plaquette de coupe selon l'une des revendications précédentes,
**caractérisée en ce que**
la cavité (16, 16'') associée à l'arête de coupe principale (8) est située du côté concave du brise-copeaux (15) et les cavités (16', 31, 32, 33) associées aux arêtes auxiliaires se situent à l'extérieur de l'arc du brise-copeaux (15).
